(19) Europäisches Patentamt
European Patent Office
Office européen des brevets

(11) EP 4 361 667 B1

(12) EUROPEAN PATENT SPECIFICATION

(45) Date of publication and mention
of the grant of the patent:
**25.02.2026 Bulletin 2026/09**

(21) Application number: 22203765.7

(22) Date of filing: **26.10.2022**

(51) International Patent Classification (IPC):
**G01S 7/40** *(2006.01)*          **G01S 7/41** *(2006.01)*
**G01S 13/86** *(2006.01)*          **G01S 13/931** *(2020.01)*

(52) Cooperative Patent Classification (CPC):
**G01S 7/415; G01S 7/40; G01S 13/86; G01S 13/931**

(54) **APPARATUS FOR COMPENSATING AN INVOLUNTARY MOVEMENT OF A RADAR SENSOR IN A RADAR OUTPUT SIGNAL OF THE RADAR SENSOR, RADAR SYSTEM AND METHOD**

VORRICHTUNG ZUR KOMPENSATION EINER UNWILLKÜRLICHEN BEWEGUNG EINES RADARSENSORS IN EINEM RADARAUSGANGSSIGNAL DES RADARSENSORS, RADARSYSTEM UND VERFAHREN

APPAREIL POUR COMPENSER UN MOUVEMENT INVOLONTAIRE D'UN CAPTEUR RADAR DANS UN SIGNAL DE SORTIE RADAR DU CAPTEUR RADAR, SYSTÈME RADAR ET PROCÉDÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**01.05.2024 Bulletin 2024/18**

(73) Proprietor: **Infineon Technologies AG
85579 Neubiberg (DE)**

(72) Inventors:
• **STROBEL, Maximilian
81539 München (DE)**

• **SCHOENFELDT, Stephan
85667 Oberpframmern (DE)**
• **HEINZ, Andrea
80687 München (DE)**

(74) Representative: **2SPL Patentanwälte PartG mbB
Landaubogen 3
81373 München (DE)**

(56) References cited:
**EP-A2- 1 819 012          DE-A1- 102017 205 331
US-A1- 2020 041 610**

## Description

## Field

The present disclosure relates to radar. Examples relate to an apparatus for compensating an involuntary movement of a radar sensor in a radar output signal of the radar sensor, a radar system and a method.

## Background

A radar sensor may be exposed to mechanical disturbance originating from a surrounding of the radar sensor. The mechanical disturbance may cause an involuntary movement of the radar sensor.

Patent publication DE 102017205331 A1 titled "Continuous Wave Radar with Vibration Detection" refers to a radar system that utilizes a vibration detector to measure the vibrations of the radar sensor. An evaluation unit is used to determine whether the vibration detected by the detector will significantly distort the flow velocity measurement obtained from the continuous wave radar sensor.

Patent publication EP 1819012 A2 titled "Antenna Signal Processing Apparatus" discusses the use of at least one accelerometer in an antenna to monitor mechanical vibrations. This data is then processed by signal processing means to generate a transfer function that can convert the accelerometer signals into an estimate of error. This error estimate can then be subtracted from the original signals received by the antenna.

Patent publication US 2020041610 A1 titled "Mitigating Vibration in a Radar System on a Moving Platform" describes a method for reducing vibration in a radar system that is installed on a moving platform. The method involves receiving signals that are reflected by objects in the field of view of the radar system, which are then processed to obtain a three-dimensional data cube. This data is then used to create a first and a second three-dimensional map. The vibration is estimated by analyzing the second map, and removed from the first map to obtain a corrected version. This corrected data is then further processed to obtain a corrected second three-dimensional map, which is used for a second detection.

Conventionally, such an involuntary movement may increase noise in the radar output signal and potentially causes undesirable effects such as erroneous detections. Hence, there may be a demand for improved compensation of an involuntary movement of a radar sensor.

## Summary

This demand is met by the subject-matter of the independent claims. Advantageous embodiments are addressed by the dependent claims.

Some aspects of the present disclosure relate to a radar system comprising an apparatus for compensating an involuntary movement of a radar sensor in a radar output signal of the radar sensor. The apparatus comprises interface circuitry configured to receive first data indicating the radar output signal of the radar sensor and receive second data indicating an involuntary movement of the radar sensor. The apparatus further comprises processing circuitry configured to determine a range representation of the radar output signal and modify the radar output signal based on the second data for compensating the involuntary movement in the radar output signal. The processing circuitry is configured to modify the radar output signal by modifying the range representation based on the second data. The radar system further comprises the radar sensor. The radar sensor is configured to emit radio frequency waves into a field of view of the radar sensor and generate the radar output signal based on received reflections of the emitted radio frequency waves. The radar system further comprises a motion sensor mechanically coupled to the radar sensor and configured to generate the second data based on the involuntary movement of the radar sensor.

Some aspects of the present disclosure relate to a method for compensating an involuntary movement of a radar sensor in a radar output signal of the radar sensor. The method comprises receiving, by interface circuitry, first data indicating the radar output signal of the radar sensor, receiving, by the interface circuitry, second data indicating the involuntary movement of the radar sensor and determining, by processing circuitry, a range representation of the radar output signal. The method further comprises modifying, by the processing circuitry, the radar output signal based on the second data for compensating the involuntary movement in the radar output signal. Modifying the radar output signal comprises modifying the range representation based on the second data. The method further comprises emitting, by the radar sensor, radio frequency waves into a field of view of the radar sensor, generating, by the radar sensor, the radar output signal based on received reflections of the emitted radio frequency waves and generating, by a motion sensor mechanically coupled to the radar sensor, the second data based on the involuntary movement of the radar sensor.

## Brief description of the Figures

Some examples of apparatuses and/or methods will be described in the following by way of example only, and with reference to the accompanying figures, in which

Fig. 1 illustrates an example of an apparatus for compensating an involuntary movement of a radar sensor in a radar output signal of the radar sensor;

Fig. 2 illustrates an example of a range representation of a radar output signal;

Fig. 3 illustrates an example of a periodic involuntary movement of a radar sensor and an example of a phase shift between pulses emitted by the radar sensor and corresponding received reflections;

Fig. 4a to Fig. 4c illustrate a first, a second and a third example of a range-velocity representation and a first, second and third example of a corresponding frequency spectrum, respectively;

Fig. 5 illustrates an example of a radar system;

Fig. 6 illustrates a flowchart of an example of a computer-implemented method for compensating an involuntary movement of a radar sensor in a radar output signal of the radar sensor; and

Fig. 7 illustrates a flowchart of another example of a computer-implemented method for compensating an involuntary movement of a radar sensor in a radar output signal of the radar sensor.

**Detailed Description**

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

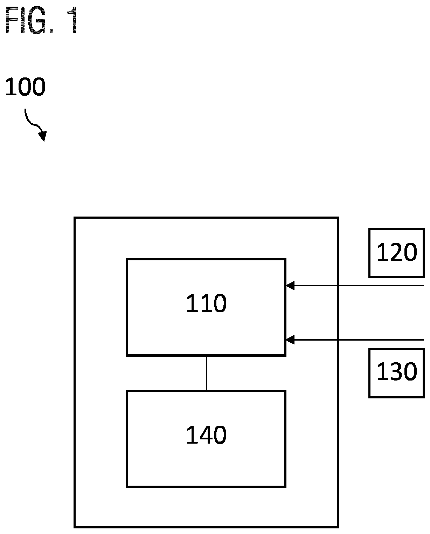

**Fig. 1** illustrates an example of an apparatus 100 for compensating an involuntary movement of a radar sensor in a radar output signal of the radar sensor. The apparatus 100 comprises interface circuitry 110

configured to receive first data 120 indicating the radar output signal of the radar sensor and to receive second data 130 indicating the involuntary movement of the radar sensor. For instance, the interface circuitry 110 may be communicatively coupled to the radar sensor or a storage device storing the first data 120. The interface circuitry 110 may receive the first data 120 via the communicative coupling (e.g., via a wired or wireless communication). The first data 120 may be considered "raw data" of the radar sensor, e.g., an output of an analog-to-digital converter of the radar sensor. For example, the first data 120 may be obtained by sampling and digitizing the radar output signal.

The interface circuitry 110 may further be communicatively coupled to a motion sensor configured to generate the second data 130 or to a storage device storing the second data 130. The interface circuitry 110 may receive the second data 130 via the communicative coupling (e.g., via a wired or wireless communication). The second data 130 may, for instance, indicate a vectorial representation of the involuntary movement and/or a scalar representation of the involuntary movement. For instance, the second data 130 may indicate one or more of a direction of the involuntary movement, a velocity and an acceleration of the radar sensor caused by the involuntary movement.

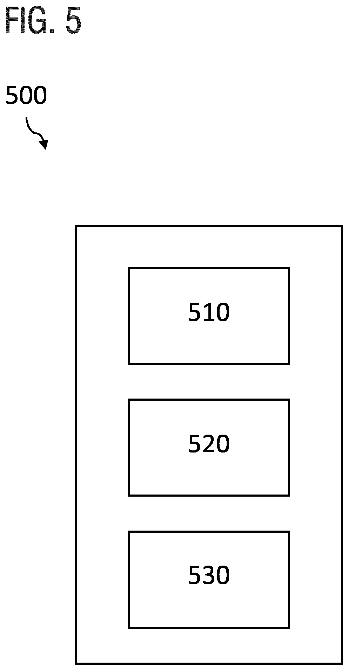

The apparatus 100 may be integrated into a radar system comprising the radar sensor and the motion sensor, such as explained with reference to Fig. 5, or may be external to the radar sensor and, e.g., integrated into an external computing system.

The radar sensor is configured to emit radio frequency waves into a field of view of the radar sensor and generate the radar output signal based on received reflections of the emitted (transmitted) radio frequency waves. For example, the radar sensor may comprise at least one antenna configured to emit multiple pulses (e.g., chirps) with a predefined modulation and receive multiple reflections thereof within a predefined time (slow time or coherence time). The radar output signal may indicate (at least partly) the received reflections. The emitted radio frequency waves may, e.g., exhibit a frequency of at least 300 MHz and at maximum 300 GHz.

The involuntary movement may be any undesired movement of the radar sensor relative to a reference system. The involuntary movement may at least partly change a distance (range) of the radar sensor relative to at least one object (target) which is to be detected by the radar sensor. The involuntary movement may be, for instance, a (self-) vibration or a (e.g., linear or non-linear) movement of the radar sensor which may be caused by a surrounding of the radar sensor, e.g., by a (mechanical) disturbance source. For instance, the involuntary movement may be caused by an air conditioner, e.g., if the radar sensor is mounted on the air conditioner for presence sensing, by a loud speaker, e.g. if the radar sensor is integrated into or placed close to a television device or a consumer loud speaker, or by a moving vehicle, e.g., if the radar sensor is integrated into an (e.g., autonomous) car or ship for sensing a surrounding of the car or ship.

The involuntary movement may be undesired in the sense that the involuntary movement may introduce a change (or distortion) to the radar output signal, e.g., a phase shift in one or more of the received reflections relative to a respective (corresponding) emitted pulse. This may cause the radar output signal to be noisy. The involuntary movement may occur during a time in which at least one of the pulses is emitted and/or at least one of the reflections is received by the radar sensor. The said change may lead to an error in an outcome of conventional signal processing performed on the first data 120.

For instance, the use of the radar sensor may aim at a determination of a location and/or a motion (e.g., velocity) of an object in a field of view (or field of regard) of the radar sensor. The radar sensor may therefore be configured to generate the radar output signal such that it bears information about the location and/or the motion of the object. The location and/or the motion of the object may be determined relative to the reference system which may be assumed to be static or to move with a predefined velocity. Conventional signal processing systems may determine the location and/or the motion assuming that the location of the radar sensor relative to the reference system is constant. As a result, the involuntary movement may lead to an erroneous or inaccurate determination of the location and/or motion of the object. For instance, the involuntary movement of the radar sensor may, conventionally, be interpreted as (additional) movement or displacement of the object.

The apparatus 100 may be applied for compensation of the involuntary movement in the radar output signal, e.g., by eliminating or decreasing an undesired change of the first data 120 or data derived thereof, which is caused by the involuntary movement. This is further explained in the following.

The apparatus 100 further comprises processing circuitry 140 coupled to the interface circuitry 110. The processing circuity 140 is configured to process the first data 120. In particular, the processing circuitry 140 is configured to modify the radar output signal based on the second data 130 for compensating the involuntary movement in the radar output signal. For instance, the processing circuitry 140 may determine (or estimate) the involuntary movement based on the second data 130 and estimate an influence of the involuntary movement on the radar output signal. Then, the processing circuitry 140 may modify the first data 120 (or data derived thereof) such that the influence of the involuntary movement on a resulting modified first data (indicating a modified radar output signal) is decreased. For instance, a deviation of the modified radar output signal from a virtual radar output signal - which would be generated in case of a static radar sensor - is decreased compared to a deviation of the (original) radar output signal from the virtual radar output signal.

The processing circuitry 140 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 120 may optionally be coupled to, e.g., read only memory (ROM) for storing software, random access memory (RAM) and/or non-volatile memory.

The processing circuitry 140 may perform the modification of the radar output signal in one or more representation of the radar output signal, i.e., the processing circuitry 140 may (e.g., algorithmically) compensate the involuntary movement in one or more predefined signal processing steps performed on the first data 120. For instance, the processing circuitry 140 may modify the radar output signal in at least one of a time domain, a frequency domain, and a range-velocity representation of the radar output signal outside the subject-matter of the claims, or modifies, according to the claimed invention, a range representation of the radar output signal. For instance, in case of a modification in the time domain, the processing circuitry 140 may determine the above-mentioned phase shift between a received reflection and its corresponding emitted pulse and compensate this phase shift (phase distortion) in the radar output signal.

For example, the processing circuitry 140 may determine the phase shift based on Equation 1 which shows a direct proportionality of a range deviation (caused by the involuntary movement) and the phase shift. The range deviation may be derived from the second data 130. A direct proportionality may apply, for example, if the range deviation is sufficiently small within one pulse period (fast time) of the emitted pulses. The compensation may be performed by shifting the phase of the radar output signal by the phase shift determined by Equation 1.

$$\Delta d = (\lambda \, \Delta\varphi)/4\pi \quad \leftrightarrow \quad \Delta\varphi = (4\pi \, \Delta d)/\lambda$$

Equation 1

where $\Delta d$ is a range deviation of the radar sensor relative to an object, $\Delta\varphi$ is the phase shift, $\lambda$ is a wavelength of the emitted radio frequency waves.

Conventional signal processing systems may be uncapable of distinguishing whether a detected motion is caused by a movement of an object or the involuntary movement of the radar sensor and, thus, be uncapable of determining the range deviation used in Equation 1 to determine a resulting phase shift. Instead, if the radar sensor itself moves (e.g., vibrates), the conventional systems may interpret an actually static object in the field of view of the radar sensor as having a relative velocity with respect to the radar sensor. Thus, the conventional systems may falsely determine a non-zero velocity for the static object (e.g., walls, floor, chairs, etc.). As a result, conventional systems may determine a range-velocity representation of the radar output signal cluttered with falsely detected movements of static objects.

By contrast, the apparatus 100 may be capable of distinguishing between a movement of an object and the involuntary movement of the radar sensor based on the second data 130. For instance, the apparatus 100 may provide a self-vibration cancelation for a radar system. Therefore, the apparatus 100 may improve the processing of the radar output signal. For instance, the apparatus 100 may reduce noise in the radar output signal (increase the signal-to-noise ratio) and therefore improve detection accuracy of an object. The apparatus 100 may decrease a probability of a false target (or ghost target) detection. Hence, the apparatus 100 may enable a more reliable and stable object detection. Further, the apparatus 100 may simplify a compensation of the involuntary movement compared to a mechanical compensation of the involuntary movement (e.g., a mechanical decoupling of the radar sensor from a disturbance source potentially causing the involuntary movement).

In some examples, the involuntary movement may be assumed to exhibit an (approximately) periodic course, or to have at least one vector component which exhibits a periodic course. Therefore, the involuntary movement may exhibit a frequency. The latter mentioned vector component may, for example, be directed parallel to an orientation of the radar sensor (e.g., along a range axis of the radar sensor). The involuntary movement may, for example, be a (self-) vibration with a certain (vibration) frequency. Thus, the radar sensor may involuntarily move back and forth relative to the object. The said frequency may be used for compensating the influence of the involuntary movement on the radar output signal.

For example, the processing circuitry 140 may be further configured to determine the frequency of the involuntary movement based on the second data 130. The processing circuitry 140 may be configured to modify the radar output signal based on the determined frequency of the involuntary movement. This may be advantageous for simplifying the compensation in case of a periodic involuntary movement. Further, this may allow a compensation in the frequency domain of the radar output signal and thus may save computing resources in comparison to a time domain compensation.

In some examples, the processing circuitry 140 may be configured to continuously determine the frequency of the involuntary movement based on the second data 130 and dynamically modify the radar output signal based on the continuously determined frequency. For example, the second data 130 may be received in a data stream allowing a continuous update of the determined frequency. The dynamic modification may increase an accuracy of the compensation, especially in cases where the involuntary movement exhibits a nonlinear (e.g., velocity or acceleration) course over time.

The second data 130 may, in some cases (e.g., in case of a data stream), be too large for practical manipulation or analysis of the second data 130 as a whole, e.g., for determination of the frequency. In these cases, windowing may be applied to the second data 130. For example, the processing circuitry 140 may be further configured to determine multiple windows by performing windowing on the second data 130. The processing circuitry 140 may be configured to determine the frequency of the involuntary movement for each of the multiple windows.

For instance, each of the windows may indicate a (time-series of) velocity or acceleration of the radar sensor within a certain time interval (e.g., one frame). A temporal length of the windows may, for instance, be adjusted to the pulse period, e.g., such that each window corresponds to a time interval in which a predefined number of consecutive pulses are emitted.

The windowing may be performed based on any windowing technique, e.g., hamming or Blackman windowing. The windowing may increase an accuracy of the frequency determination and thus an accuracy of the compensation of the involuntary movement in the radar output signal.

The processing circuitry 140 may determine the frequency of the involuntary movement based on any frequency determination technique. In some examples, the processing circuitry 140 is configured to determine the frequency of the involuntary movement by performing a Fourier-transformation (transform) on the second data 130. For instance, the Fourier-transformation may be a fast Fourier-transformation (FFT). The second data 130 may indicate, e.g., a time domain representation of the involuntary movement which may be transformed into a frequency domain representation for determining the frequency (spectrum). Alternatively, any other transformation technique, e.g., Laplace-transformation, may be used for determining the frequency. The use of a Fourier-transformation may simplify the determination of the frequency. The frequency may, in some examples, be updated dynamically to adapt the compensation to changes of the involuntary movement over time.

In some examples, the second data 130 indicates an acceleration of the radar sensor caused by the involuntary movement, e.g., in cases where the second data 130 is generated by an acceleration sensor mechanically coupled to the radar sensor. The processing circuitry 140 may further be configured to determine the involuntary movement based on the acceleration of the radar sensor. For instance, the processing circuitry 140 may integrate the acceleration for determining a velocity or displacement of the radar sensor caused by the involuntary movement. The latter may be beneficial in cases there the involuntary movement is caused by a vibration of the radar sensor which may cause high accelerations.

As explained above, a modification of the radar output signal according to the claimed invention is performed in a range representation of the radar output signal. For example, the processing circuitry 140 is further configured to determine the range representation of the radar output signal. The range representation may be considered a data structure where range values are arranged into a fast time over slow time matrix. For example, the processing circuitry 140 may determine the range representation by determining a respective range slice (range profile) for each received reflection (of a set of received reflections) and arrange (structure) the resulting range slices along slow time. A range slice may indicate range values over fast time.

For obtaining the range slices, the processing circuitry 140 may correlate (e.g., a carrier-removed and digitized version of) each pulse of a set of emitted pulses with its corresponding received reflection (e.g., with a carrier-removed and digitized version thereof), yielding a respective correlation series over slow time. The correlation series may exhibit at least one peak correlation which indicates presence of an object (e.g., the correlation may have a proportional relation to the range of an object). The range slices may be determined by translating the correlation series into range values according to a predefined correlation-range relation. Optionally, range binning may be applied on the correlation series for determining the range values. Each range slice may be arranged into a respective row of a matrix, yielding the range representation. In some examples, the processing circuitry 140 is further configured to determine the range representation by performing a Fourier-transformation on the first data 120, e.g., a (fast) Fourier-transformation along fast time. For instance, the correlation may be performed by using the Fourier-transformation. In this manner, the correlation may be determined more efficiently.

According to the claimed invention, the processing circuitry 140 is configured to modify the radar output signal by modifying the range representation based on the second data 130. For instance, the processing circuitry 140 may directly modify the range values of at least one of the range slices, e.g., based on a relation between the determined frequency of the involuntary movement and a range distortion. Alternatively, the processing circuitry 140 may determine (over slow time) a frequency distortion in the range representation caused by the involuntary movement. The modification of the range representation may then enable a manipulation of the radar output signal in the frequency domain. Since in some cases solely few frequency components of a frequency spectrum of the range representation may be affected by the involuntary movement (e.g., when the involuntary movement exhibits a relatively constant frequency within one pulse period), operating in the frequency domain may simplify the compensation of the involuntary movement.

In some examples, the processing circuitry 140 is configured to modify the radar output signal by frequency filtering the range representation (e.g., along slow time). The processing circuitry 140 may be further configured to adjust a filter parameter (filter coefficient, filter characteristic) for frequency filtering the range representation based on the second data 130. For instance, the processing circuitry 140 may comprise a digital filter which is configured to attenuate or suppress a distortion frequency (component) in the range representation. The digital filter may further be adjustable based on the filter parameter which may indicate the distortion frequency component and a desired modification of said distortion frequency component. Frequency filtering may be beneficial for achieving a precise removal or attenuation of the influence of the involuntary movement on the range representation. The processing circuitry 140 may, in cases where the frequency of the involuntary movement is continuously determined, dynamically modify the filter parameter.

In cases where a frequency of the involuntary movement is determined, the processing circuitry 140 may be configured to modify the radar output signal by filtering the frequency of the involuntary movement in the range representation. For instance, the processing circuitry 140 may be configured to filter the frequency of the involuntary movement by band-stop filtering the range representation in a frequency range including the determined frequency of the involuntary movement. The use of a band-stop filter may enable undistorted frequencies along slow time to pass the filtering unaltered whereas distorted frequencies are selectively reduced, resulting in a high signal-to-noise ratio.

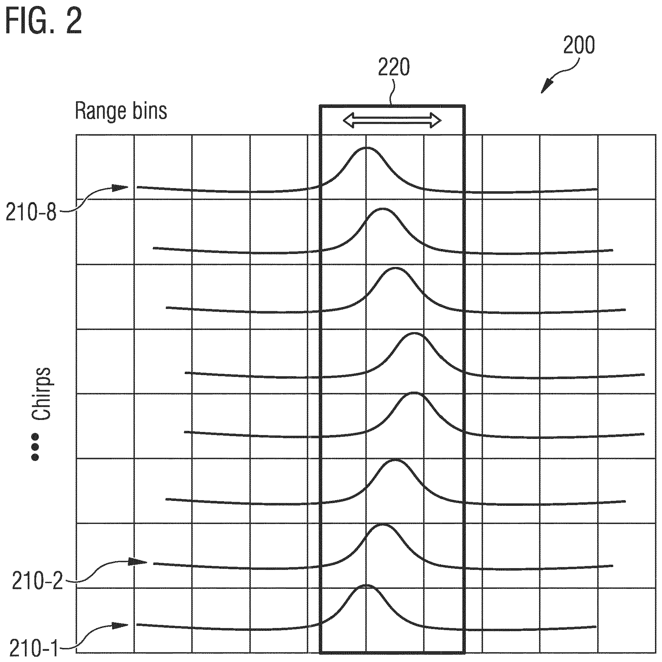

An example of a range representation 200 is illustrated by Fig. 2. The range representation 200 represents a matrix where correlation series 210-1 to 210-8 (correlations over fast time) are arranged into rows of the matrix. Each of the correlation series 210-1 to 210-8 represent correlations between samples of a respective pulse and samples of its corresponding reflection of a radar output signal of a radar sensor. The correlation series 210-1 to 210-8, hence, indicate phase shifts between the pulse and its corresponding reflection.

In columns (range bins) of section 220 of the matrix, each of the correlation series 210-1 to 210-8 exhibits a respective correlation peak. The section 220 is affected by an involuntary movement of the radar sensor which results in a shift of the correlation peaks along the columns. The course of the shift over the correlation series 210-1 to 210-8 is periodic, indicating a periodic involuntary movement of the radar sensor (e.g., a vibration).

An apparatus as described herein, such as apparatus 100, may perform frequency filtering on the range representation 200 to compensate the involuntary movement.

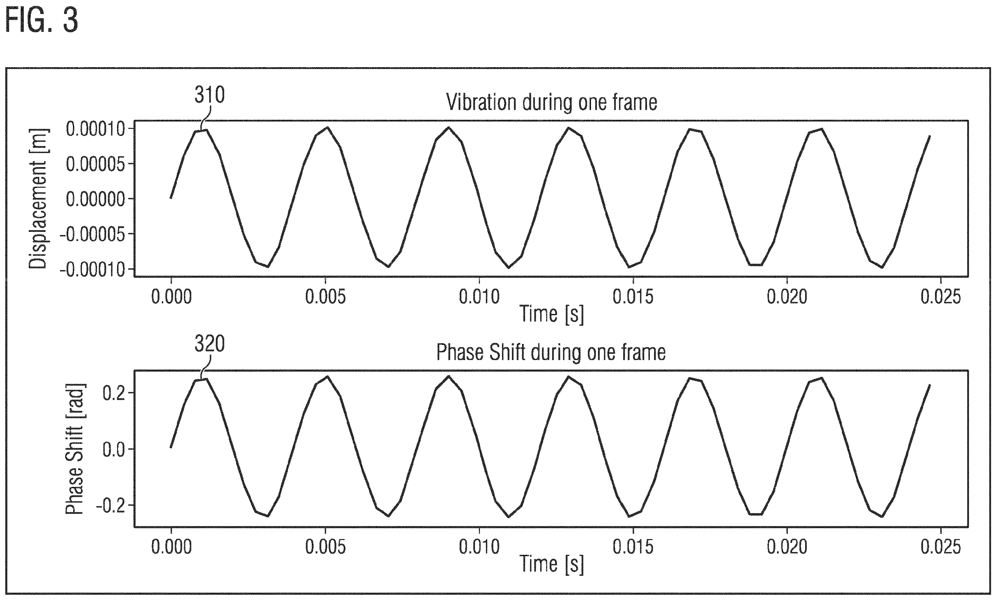

An example of a periodic involuntary movement 310 of a radar sensor and an example of a phase shift 320 between pulses emitted by the radar sensor and corresponding received reflections are illustrated by **Fig. 3.** The involuntary movement 310 exhibits a sinusoidal course over time. The phase shift 320 exhibits a similar sinusoidal course over time. This may indicate that the phase shift 320 is mainly caused by the involuntary movement. However, a conventional motion detector may misinterpret the changing phase shift 320 over time as a motion of an object. The phase shift 320 may, hence, cause ghost targets in the near field of the radar sensor which may, in some cases, exhibit a stronger signal than an actually moving object.

An apparatus as explained herein, such as apparatus 100, may compensate the involuntary movement 310 of the radar sensor in a radar output signal of the radar sensor. For instance, the apparatus may comprise processing circuitry which may be configured to determine a frequency of the involuntary movement 310 and filter the frequency of the involuntary movement 310, e.g., in a range representation of the radar output signal. The apparatus may therefore reduce false targets caused by the involuntary movement 310.

Referring back to Fig. 1, in some examples, the processing circuitry 140 may be configured to modify the second data 130 or data derived thereof based on a transfer function indicating a relation between the involuntary movement and a phase distortion or a frequency distortion of the radar output signal caused by the involuntary movement. The data derived from the second data 130 may result from any signal processing performed on the second data 130, e.g., the derived data may indicate at least one window determined by windowing performed on the second data 130. The processing circuitry 140 may be configured to modify the radar output signal based on the modified second data or the modified data derived thereof.

The relation may, for instance, indicate a relation between a range deviation (caused by the involuntary movement) and a phase shift of the affected received reflection. In some cases, a linear relation may be assumed. In other cases, the relation (or individual components thereof) may be non-linear (exhibit a non-linearity). Especially for the latter cases, it may be beneficial to apply the transfer function (e.g., transfer function f with phase shift = f(change in range)) to compensate said non-linearity. For instance, the transfer function may be based on a trained machine-learning model or a mathematical model. The latter may enable a simplification of the compensation of non-linearities, especially in cases where the relation is known or estimated empirically or by simulation. The former may enable the estimation of unknown or complex relations.

The trained machine-learning model is a data structure and/or set of rules representing a statistical model that the processing circuitry 140 uses to determine the relation without using explicit instructions, instead relying on models and inference. The data structure and/or set of rules represents learned knowledge (e.g. based on training performed by a machine-learning algorithm). For example, in machine-learning, instead of a rule-based transformation of data, a transformation of data may be used, that is inferred from an analysis of historical and/or training data. In the proposed technique, the content of input data (first data 120 and the second data 130) is analyzed using the machine-learning model (i.e. a data structure and/or set of rules representing the model).

The machine-learning model is trained by a machine-learning algorithm. The term "machine-learning algorithm" denotes a set of instructions that are used to create, train or use a machine-learning model. For the machine-learning model to analyze the content of input data, the machine-learning model may be trained using training and/or historical data indicating an involuntary movement and training and/or historical data indicating a radar output signal of the radar sensor as input and training content information (e.g. labels indicating the transfer function or the phase and/or frequency distortion caused by the involuntary movement) as output. By training the machine-learning model with a large set of training data and associated training content information (e.g. labels or annotations), the machine-learning model "learns" to recognize the content of the training data, so that the content of input data that are not included in the training data can be recognized using the machine-learning model. By training the machine-learning model using training data and a desired output, the machine-learning model "learns" a transformation between the training data and the output, which can be used to provide an output based on non-training input data provided to the machine-learning model.

The machine-learning model may be trained using training input data (e.g. training data). For example, the machine-learning model may be trained using a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. For example, a training sample may comprise training data as input data and one or more labels as desired output data. The labels indicate the corresponding transfer function.

Apart from supervised learning, semi-supervised learning may be used. In semi-supervised learning, some of the training samples lack a corresponding desired output value. Supervised learning may be based on a supervised learning algorithm (e.g. a classification algorithm or a similarity learning algorithm). Classification algorithms may be used as the desired outputs of the trained machine-learning model are restricted to a limited set of values (categorical variables), i.e., the input is classified to one of the limited set of values (type of exercise, execution quality). Similarity learning algorithms are similar to classification algorithms but are based on learning from examples using a similarity function that measures how similar or related two objects are.

Apart from supervised or semi-supervised learning, unsupervised learning may be used to train the machine-learning model. In unsupervised learning, (only) input data are supplied and an unsupervised learning algorithm is used to find structure in the input data such as training and/or historical data (e.g. by grouping or clustering the input data, finding commonalities in the data). Clustering is the assignment of input data comprising a plurality of input values into subsets (clusters) so that input values within the same cluster are similar according to one or more (predefined) similarity criteria, while being dissimilar to input values that are included in other clusters.

Furthermore, additional techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

For example, the machine-learning model may be an Artificial Neural Network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receive input values (e.g. the input data), hidden nodes that are (only) connected to other nodes, and output nodes that provide output values (e.g. a transfer function). Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may comprise adjusting the weights of the nodes and/or edges of the ANN, i.e., to achieve a desired output for a given input. In some examples, the machine-learning model may be a combination of the above examples.

Depending on the application, a range-velocity representation (range-Doppler map) of the modified radar output signal may be desired. For example, the processing circuitry 140 may be further configured to determine the range-velocity representation and detect a moving target in a field of view of the radar sensor based on the range-velocity representation. The processing circuitry 140 may detect a moving target by, e.g., applying a moving target indicator (MTI) filter on the range-velocity representation.

The range-velocity representation may be considered a data structure where range values determined for at least one object in the field of view of the radar sensor are associated with velocity values determined for the object (e.g., radial velocity of the object). Since the range-velocity representation is based on the modified version of the radar output signal, the resulting velocity values may be cleared from distortion caused by the involuntary movement.

A range representation may be determined and modified as explained above. In some examples, the processing circuitry 140 is configured to determine the range-velocity representation by performing an (e.g., discrete) Fourier-transformation on the modified range representation.

For instance, the processing circuitry 140 may Fourier-transform (over slow time) each column of the matrix of the modified range representation. From the transformed columns (frequency spectra of the range representation), the velocity values may be derived since a change of range over slow time indicates a motion of an object. The range values may be obtained from the modified range representation and associated with the velocity values, yielding the range-velocity representation. The use of a range-velocity representation may enable an efficient and reliable object detection.

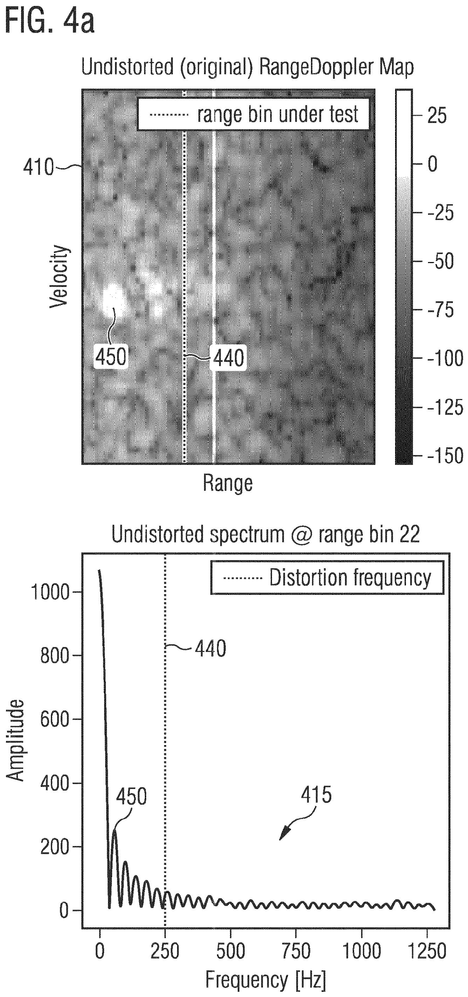

A first, a second and a third example of a range-velocity representation 410, 420 and 430, respectively, and a first, second and third example of a corresponding frequency spectrum 415, 425 and 435, respectively, are illustrated by **Fig. 4a to Fig. 4c,** respectively. The first, second and third example relate to an undistorted, a distorted and a modified (filtered) radar output signal of a radar sensor, respectively.

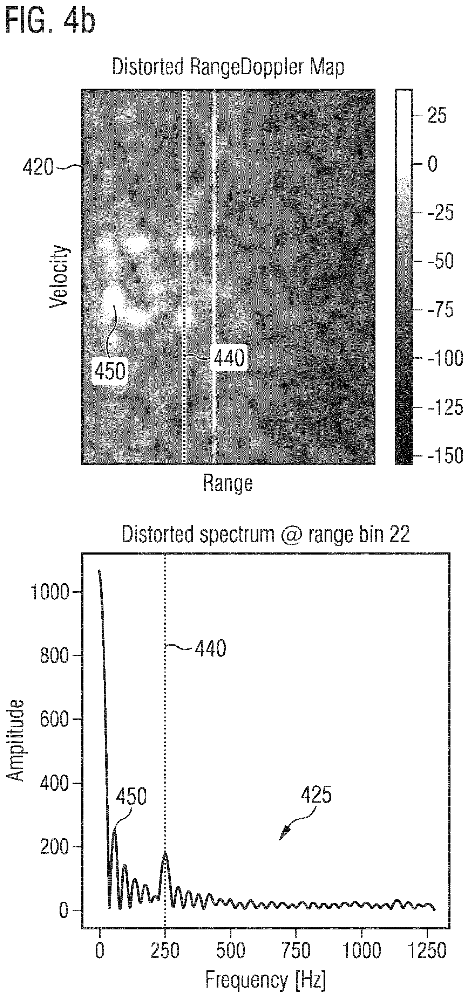

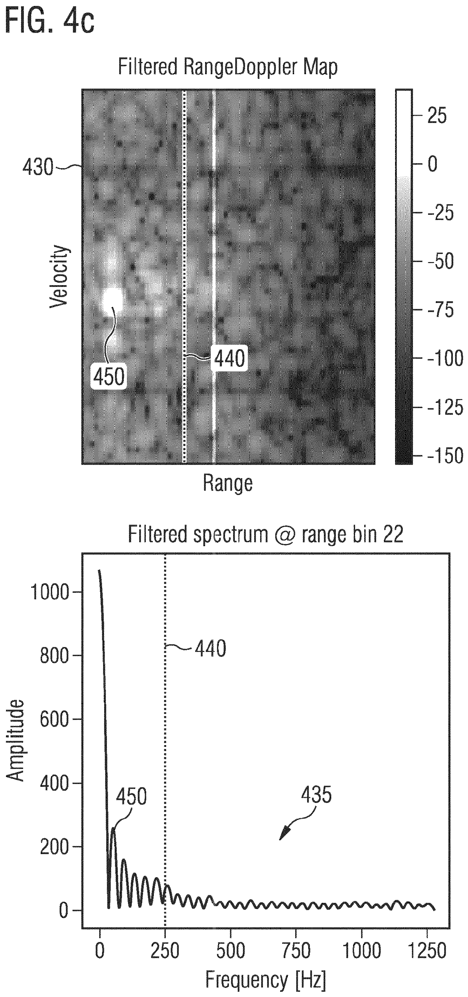

In the example of Fig. 4b and Fig. 4c, the radar sensor exhibits an involuntary movement with a frequency of 250 Hz (Hertz) and an amplitude of 0,1 mm (millimeter), resulting in the distorted radar output signal. The undistorted radar output signal in the example of Fig. 4a is a virtual signal which the radar sensor would generate if it were static. An apparatus as described herein, such as apparatus 100, may modify the distorted radar output signal for compensating the involuntary movement, yielding the modified radar output signal.

For illustrative purposes, a range bin 440 corresponding to the frequency of 250 Hz is marked in each of the range-velocity representations 410, 420, 430 and in each of the frequency spectra 415, 425, 435. A peak (amplitude) 450 is shown in each of the frequency spectra 415, 425, 435 at a lower end of the frequency axes of the frequency spectra 415, 425, 435. A corresponding peak 450 (velocity) is shown in each of the range-velocity representations 410, 420, 430. Said peak indicates a moving object in the field of view of the radar sensor.

The first frequency spectrum 415 and the first range-velocity representation 410 are based on the same range representation of the undistorted radar output signal. The peak 450 in the first frequency spectrum 415 and the first range-velocity representation 410 is clearly distinguishable of respective values in the range bin 440.

The second frequency spectrum 425 and the second range-velocity representation 420 are based on the same range representation of the distorted radar output signal of the radar sensor. The peak 450 in the second frequency spectrum 425 is blurred. Further, the peak 450 in the second frequency spectrum 425 and in the second range-velocity representation 420 are barely distinguishable of respective values in the range bin 440. A conventional object detector may falsely detect a target at range bin 440 and may falsely disregard the moving object.

The third frequency spectrum 435 and the third range-velocity representation 430 are based on the same range representation of the modified radar output signal. The peak 450 in the third frequency spectrum 435 and the third range-velocity representation 430 is clearly distinguishable of respective values in the range bin 440, similarly to the scenario of the undistorted radar output signal. Hence, the apparatus may improve a reliability and accuracy of an object detection.

**Fig. 5** illustrates an example of a radar system 500. The radar system 500 comprises an apparatus 510 for compensating an involuntary movement of a radar sensor in a radar output signal of the radar sensor as described herein, such as apparatus 100.

The radar system 500 further comprises the radar sensor 520. The radar sensor 520 is configured to emit radio frequency waves into a field of view of the radar sensor and generate the radar output signal based on received reflections of the emitted radio frequency waves. In some examples, the radar sensor 520 generates the first data. In some examples, the radar sensor 520 is an FMCW radar sensor.

The radar system 500 further comprises a motion sensor 530 mechanically coupled to the radar sensor 520 and configured to generate the second data based on the involuntary movement of the radar sensor 520. The motion sensor 530 may be mechanically coupled to the radar sensor 520 such that the involuntary movement of the radar sensor 520 is mechanically transmitted to the motion sensor 530, e.g., the motion sensor 530 and the radar sensor 520 may be exposed to the same disturbance source causing the involuntary movement. In some examples, the involuntary movement is at least partially directed parallel to an orientation of the radar sensor 520. The motion sensor 530 may, in some examples, comprise an acceleration sensor or an inertial measurement unit configured to measure the involuntary movement of the radar sensor 520 and generate the second data based on the measured involuntary movement of the radar sensor 520.

The radar system 500 may improve the processing of the radar output signal. For instance, the radar system 500 may reduce noise in the radar output signal. The radar system 500 may decrease a probability of a false target detection. Hence, the radar system 500 may enable a more reliable and stable object detection.

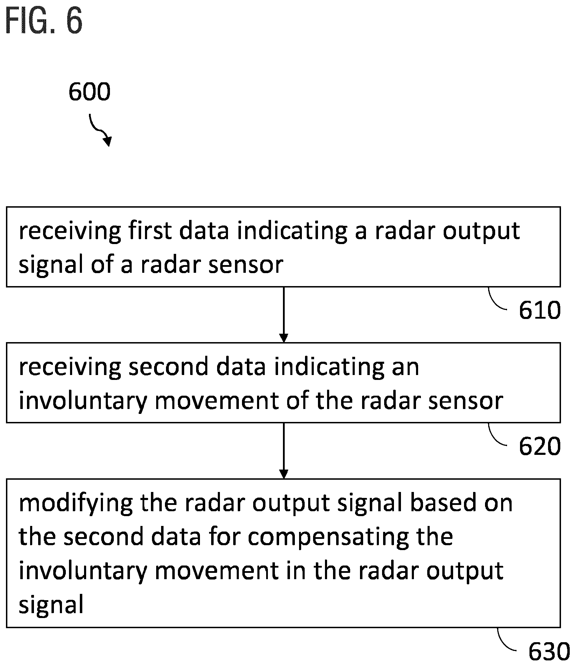

**Fig. 6** illustrates a flowchart of an example of a computer-implemented method 600 for compensating an involuntary movement of a radar sensor in a radar output signal of the radar sensor.

The method 600 comprises receiving 610 first data indicating the radar output signal of the radar sensor. The method 600 further comprises receiving 620 second data indicating the involuntary movement of the radar sensor and modifying 630 the radar output signal based on the second data for compensating the involuntary movement in the radar output signal.

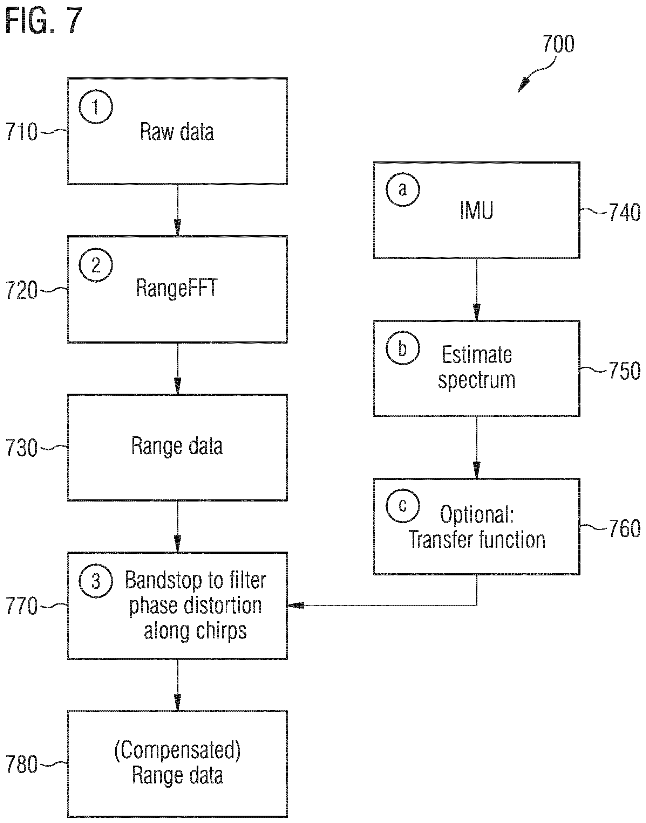

**Fig. 7** illustrates a flowchart of another example of a computer-implemented method 700 for compensating an involuntary movement of a radar sensor in a radar output signal of the radar sensor.

The method 700 comprises receiving 710 first data (raw data) indicating the radar output signal of the radar sensor. The method 700 further comprises performing 720 a Fourier-transformation (Range FFT (fast Fourier transformation)) on the first data. The method 700 further comprises determining 730 a range representation (range data) of the radar output signal based on the transformed first data.

The method 700 further comprises receiving 740 second data (generated by an inertial measurement unit, IMU) indicating the involuntary movement (vibration) of the radar sensor. The second data indicates an acceleration of the radar sensor caused by the involuntary movement. The method 700 may further comprise determining the involuntary movement based on the acceleration of the radar sensor. Optionally, windowing may be applied on the second data to get a time-series of an acceleration of the radar sensor caused by the involuntary movement.

The method 700 further comprises determining 750 (estimating) a frequency (spectrum) of the involuntary movement based on the second data. For instance, the time-series may be transformed from the time-domain into the frequency domain using a Fourier-transformation. The method 700 optionally comprises modifying 760 the second data or data derived thereof (e.g., the frequency spectrum) based on a transfer function indicating a relation between the involuntary movement and a phase distortion or a frequency distortion of the radar output signal caused by the involuntary movement.

The method 700 further comprises modifying 770 the radar output signal by modifying (e.g., dynamic filtering) the range representation based on the modified second data or modified data derived thereof. For instance, a digital filter, e.g., a band-stop filter, may be applied to compensate phase distortions introduced by self-vibration of the radar sensor. The filter parameter (characteristics) of the digital filter may be chosen for compensating the distortion spectrum (frequency of the involuntary movement). By continuously updating the distortion spectrum, the filtering adapts to changes in the frequency of the involuntary movement over time. The band-stop filter may filter phase distortions along chirps in the range representation. The method 700 further comprises outputting 780 the modified range representation for further processing (e.g., further transformations) of the modified range representation.

More details and aspects of the methods 600, 700 are explained in connection with the proposed technique or one or more examples described above, e.g., with reference to Fig. 1 and Fig. 6. The methods 600, 700 may comprise one or more additional optional features corresponding to one or more aspects of the proposed technique, or one or more examples described above.

The methods 600, 700 may improve the processing of a radar output signal. For instance, the methods 600, 700 may reduce noise in the radar output signal. The methods 600, 700 may decrease a probability of a false target detection. Hence, the methods 600, 700 may enable a more reliable and stable object detection.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as (e.g., transitory or non-transitory) digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

**1.** A radar system (500) comprising:

a radar sensor (520), wherein the radar sensor (520) is configured to:

emit radio frequency waves into a field of view of the radar sensor (520); and generate a radar output signal based on received reflections of the emitted radio frequency waves;

a motion sensor mechanically coupled to the radar sensor (520) and configured to generate second data (130) indicating an involuntary movement of the radar sensor (520); and an apparatus (510) for compensating the involuntary movement of the radar sensor (520) in the radar output signal, wherein the apparatus (510) comprises:

interface circuitry (110) configured to:

receive first data (120) indicating the radar output signal of the radar sensor (520); and receive the second data (130); and

processing circuitry (140) configured to: determine a range representation of the radar output signal; **characterized in that** the processing circuitry is further configured to:

modify the radar output signal based on the second data (130) for compensating the involuntary movement in the radar output signal, wherein the processing circuitry (140) is configured to modify the radar output signal by modifying the range representation based on the second data (130).

2. The radar system (500) of claim 1, wherein the motion sensor comprises an acceleration sensor or an inertial measurement unit configured to measure the involuntary movement of the radar sensor (520) and generate the second data (130) based on the measured involuntary movement of the radar sensor (520).

3. The radar system (500) of any one of the previous claims, wherein the processing circuitry (140) is further configured to determine a frequency of the involuntary movement based on the second data (130), and wherein the processing circuitry (140) is configured to modify the radar output signal based on the determined frequency of the involuntary movement.

4. The radar system (500) of claim 3, wherein the processing circuitry (140) is configured to:

   continuously determine the frequency of the involuntary movement based on the second data (130); and
   dynamically modify the radar output signal based on the continuously determined frequency.

5. The radar system (500) of claim 3 or claim 4, wherein the processing circuitry (140) is further configured to determine multiple windows by performing windowing on the second data (130), wherein the processing circuitry (140) is configured to determine the frequency of the involuntary movement for each of the multiple windows.

6. The radar system (500) of any one of claims 3 to 5, wherein the second data (130) indicates an acceleration of the radar sensor (520) caused by the involuntary movement, wherein the processing circuitry (140) is further configured to determine the involuntary movement based on the acceleration of the radar sensor (520).

7. The radar system (500) of any one of the previous claims, wherein the processing circuitry (140) is configured to modify the radar output signal by frequency filtering the range representation, and wherein the processing circuitry (140) is further configured to adjust, using a digital filter configured to attenuate or suppress a distortion frequency in the range representation, a filter parameter for frequency filtering the range representation based on the second data (130).

8. The radar system (500) of any one of claims 3 to 6, wherein the processing circuitry (140) is configured to modify the radar output signal by filtering the frequency of the involuntary movement in the range representation.

9. The radar system (500) of claim 8, wherein the processing circuitry (140) is configured to filter the frequency of the involuntary movement by band-stop filtering the range representation in a frequency range including the determined frequency of the involuntary movement.

10. The radar system (500) of any one of the previous claims, wherein the processing circuitry (140) is configured to:

    modify the second data (130) or data derived thereof based on a transfer function indicating a relation between the involuntary movement and a phase distortion or a frequency distortion of the radar output signal caused by the involuntary movement; and
    modify the radar output signal based on the modified second data (130) or the modified data derived thereof.

11. The radar system (500) of claim 10, wherein the transfer function is based on a trained machine-learning model or a mathematical model.

12. The radar system (500) of any one of the previous claims, wherein the processing circuitry (140) is further configured to:

    determine a range-velocity representation of the modified radar output signal; and
    detect a moving target in a field of view of the radar sensor (520) based on the range-velocity representation.

13. A method (600) for compensating an involuntary movement of a radar sensor in a radar output signal of the radar sensor, comprising:

    emitting, by the radar sensor, radio frequency waves into a field of view of the radar sensor;
    generating, by the radar sensor, the radar output signal based on received reflections of the emitted radio frequency waves;
    generating, by a motion sensor mechanically coupled to the radar sensor, second data indicating the involuntary movement of the radar sensor;

receiving (610), by interface circuitry, first data indicating the radar output signal of the radar sensor;

receiving (620), by the interface circuitry, the second data;

determining, by processing circuitry, a range representation of the radar output signal;

the method being further **characterized by** comprising:

modifying (630), by the processing circuitry, the radar output signal based on the second data for compensating the involuntary movement in the radar output signal, wherein modifying (630) the radar output signal comprises modifying the range representation based on the second data.

**Patentansprüche**

1. Radarsystem (500), umfassend:
einen Radarsensor (520), wobei der Radarsensor (520) zu Folgendem ausgelegt ist:

Emittieren von Hochfrequenzwellen in ein Sichtfeld des Radarsensors (520); und
Erzeugen eines Radarausgangssignals basierend auf empfangenen Reflexionen der emittierten Hochfrequenzwellen;
einen Bewegungssensor, der mechanisch mit dem Radarsensor (520) gekoppelt und dazu ausgelegt ist, zweite Daten (130) zu erzeugen, die eine unwillkürliche Bewegung des Radarsensors (520) angeben; und
eine Einrichtung (510) zum Kompensieren der unwillkürlichen Bewegung des Radarsensors (520) in dem Radarausgangssignal, wobei die Einrichtung (510) Folgendes umfasst:
eine Schnittstellenschaltungsanordnung (110), die zu Folgendem ausgelegt ist:

Empfangen erster Daten (120), die das Radarausgangssignal des Radarsensors (520) angeben; und
Empfangen der zweiten Daten (130); und
eine Verarbeitungsschaltungsanordnung (140), die zu Folgendem ausgelegt ist:
Bestimmen einer Entfernungsdarstellung des Radarausgangssignals; **dadurch gekennzeichnet, dass** die Verarbeitungsschaltungsanordnung ferner zu Folgendem ausgelegt ist:
Modifizieren des Radarausgangssignals basierend auf den zweiten Daten (130) zum Kompensieren der unwillkürlichen Bewegung in dem Radarausgangssignal, wobei die Verarbeitungsschaltungsanordnung (140) dazu ausgelegt ist, das Radarausgangssignal durch Modifizieren der Entfernungsdarstellung basierend auf den zweiten Daten (130) zu modifizieren.

2. Radarsystem (500) nach Anspruch 1, wobei der Bewegungssensor einen Beschleunigungssensor oder eine Trägheitsnavigationseinheit umfasst, der/die dazu ausgelegt ist, die unwillkürliche Bewegung des Radarsensors (520) zu messen und die zweiten Daten (130) basierend auf der gemessenen unwillkürlichen Bewegung des Radarsensors (520) zu erzeugen.

3. Radarsystem (500) nach einem der vorhergehenden Ansprüche, wobei die Verarbeitungsschaltungsanordnung (140) ferner dazu ausgelegt ist, eine Frequenz der unwillkürlichen Bewegung basierend auf den zweiten Daten (130) zu bestimmen, und wobei die Verarbeitungsschaltungsanordnung (140) dazu ausgelegt ist, das Radarausgangssignal basierend auf der bestimmten Frequenz der unwillkürlichen Bewegung zu modifizieren.

4. Radarsystem (500) nach Anspruch 3, wobei die Verarbeitungsschaltungsanordnung (140) zu Folgendem ausgelegt ist:

kontinuierlichen Bestimmen der Frequenz der unwillkürlichen Bewegung basierend auf den zweiten Daten (130); und
dynamischen Modifizieren des Radarausgangssignals basierend auf der kontinuierlich bestimmten Frequenz.

5. Radarsystem (500) nach Anspruch 3 oder Anspruch 4, wobei die Verarbeitungsschaltungsanordnung (140) ferner dazu ausgelegt ist, mehrere Fenster durch Durchführen von Fensterung an den zweiten Daten (130) zu bestimmen, wobei die Verarbeitungsschaltungsanordnung (140) dazu ausgelegt ist, die Frequenz der unwillkürlichen Bewegung für jedes der mehreren Fenster zu bestimmen.

6. Radarsystem (500) nach einem der Ansprüche 3 bis 5, wobei die zweiten Daten (130) eine Beschleunigung des Radarsensors (520) angeben, die durch die unwillkürliche Bewegung verursacht wird, wobei die Verarbeitungsschaltungsanordnung (140) ferner dazu ausgelegt ist, die unwillkürliche Bewegung basierend auf der Beschleunigung des Radarsensors (520) zu bestimmen.

7. Radarsystem (500) nach einem der vorhergehenden Ansprüche, wobei die Verarbeitungsschaltungsanordnung (140) dazu ausgelegt ist, das Radarausgangssignal durch Frequenzfiltern der Entfernungsdarstellung zu modifizieren, und wobei die Verarbeitungsschaltungsanordnung (140) ferner dazu ausgelegt ist, einen Filterparameter zum Frequenzfiltern der Entfernungsdarstellung unter Verwendung eines digitalen Filters, das dazu ausgelegt ist, eine Verzerrungsfrequenz in der Entfernungsdarstellung zu dämpfen oder zu unterdrücken, basierend auf den zweiten Daten (130) anzupassen.

8. Radarsystem (500) nach einem der Ansprüche 3 bis 6, wobei die Verarbeitungsschaltungsanordnung (140) dazu ausgelegt ist, das Radarausgangssignal durch Filtern der Frequenz der unwillkürlichen Bewegung in der Entfernungsdarstellung zu modifizieren.

9. Radarsystem (500) nach Anspruch 8, wobei die Verarbeitungsschaltungsanordnung (140) dazu ausgelegt ist, die Frequenz der unwillkürlichen Bewegung durch Bandsperrfiltern der Entfernungsdarstellung in einem Frequenzbereich zu filtern, der die bestimmte Frequenz der unwillkürlichen Bewegung umfasst.

10. Radarsystem (500) nach einem der vorhergehenden Ansprüche, wobei die Verarbeitungsschaltungsanordnung (140) zu Folgendem ausgelegt ist:

Modifizieren der zweiten Daten (130) oder davon abgeleiteter Daten basierend auf einer Übertragungsfunktion, die eine Beziehung zwischen der unwillkürlichen Bewegung und einer Phasenverzerrung oder einer Frequenzverzerrung des Radarausgangssignals angibt, die durch die unwillkürliche Bewegung verursacht wird; und
Modifizieren des Radarausgangssignals basierend auf den modifizierten zweiten Daten (130) oder den modifizierten Daten, die davon abgeleitet sind.

11. Radarsystem (500) nach Anspruch 10, wobei die Übertragungsfunktion auf einem trainierten Modell für maschinelles Lernen oder einem mathematischen Modell basiert.

12. Radarsystem (500) nach einem der vorhergehenden Ansprüche, wobei die Verarbeitungsschaltungsanordnung (140) zu Folgendem ausgelegt ist:

Bestimmen einer Entfernungs-Geschwindigkeits-Darstellung des modifizierten Radarausgangssignals; und
Erkennen eines sich bewegenden Ziels in einem Sichtfeld des Radarsensors (520) basierend auf der Entfernungs-Geschwindigkeits-Darstellung.

13. Verfahren (600) zum Kompensieren einer unwillkürlichen Bewegung eines Radarsensors in einem Radarausgangssignal des Radarsensors, umfassend:

Emittieren von Hochfrequenzwellen durch den Radarsensor in ein Sichtfeld des Radarsensors;
Erzeugen des Radarausgangssignals durch den Radarsensor basierend auf empfangenen Reflexionen der emittierten Hochfrequenzwellen;
Erzeugen zweiter Daten, die die unwillkürliche Bewegung des Radarsensors angeben, durch einen Bewegungssensor, der mechanisch mit dem Radarsensor gekoppelt ist;
Empfangen (610) erster Daten, die das Radarausgangssignal des Radarsensors angeben, durch eine Schnittstellenschaltungsanordnung;
Empfangen (620) der zweiten Daten durch die Schnittstellenschaltungsanordnung;
Bestimmen einer Entfernungsdarstellung des Radarausgangssignals durch eine Verarbeitungsschaltungsanordnung; wobei das Verfahren ferner **dadurch gekennzeichnet ist, dass** es Folgendes umfasst:
Modifizieren (630) des Radarausgangssignals durch die Verarbeitungsschaltungsanordnung basierend auf den zweiten Daten zum Kompensieren der unwillkürlichen Bewegung in dem Radarausgangssignal, wobei das Modifizieren (630) des Radarausgangssignals Modifizieren der Entfernungsdarstellung basierend auf den zweiten Daten umfasst.

## Revendications

1. Système radar (500) comprenant :
un capteur radar (520), dans lequel le capteur radar (520) est conçu pour :

émettre des ondes radiofréquences dans un champ de vision du capteur radar (520) ; et
générer un signal de sortie radar sur la base de réflexions reçues des ondes radiofréquences émises ;
un capteur de mouvement couplé mécaniquement au capteur radar (520) et conçu pour générer des secondes données (130) indiquant un mouvement involontaire du capteur radar (520) ; et
un appareil (510) de compensation du mouvement involontaire du capteur radar (520) dans le signal de sortie radar, dans lequel l'appareil (510) comprend :
un ensemble de circuits d'interface (110) conçu pour :

recevoir des premières données (120) indiquant le signal de sortie radar du capteur radar (520) ; et
recevoir les secondes données (130) ; et
un ensemble de circuits de traitement (140) conçu pour :

déterminer une représentation de distance du signal de sortie radar ; **caractérisé en ce que** l'ensemble de circuits de traitement est en outre conçu pour :

modifier le signal de sortie radar sur la base des secondes données (130) pour compenser le mouvement involontaire dans le signal de sortie radar, l'ensemble de circuits de traitement (140) étant conçu pour modifier le signal de sortie radar en modifiant la représentation de distance sur la base des secondes données (130).

2. Système radar (500) selon la revendication 1, dans lequel le capteur de mouvement comprend un capteur d'accélération ou une unité de mesure inertielle conçue pour mesurer le mouvement involontaire du capteur radar (520) et générer les secondes données (130) sur la base du mouvement involontaire mesuré du capteur radar (520).

3. Système radar (500) selon l'une quelconque des revendications précédentes, dans lequel l'ensemble de circuits de traitement (140) est en outre conçu pour déterminer une fréquence du mouvement involontaire sur la base des secondes données (130), et dans lequel l'ensemble de circuits de traitement (140) est conçu pour modifier le signal de sortie radar sur la base de la fréquence déterminée du mouvement involontaire.

4. Appareil (500) selon la revendication 3, dans lequel l'ensemble de circuits de traitement (140) est conçu pour :

déterminer en continu la fréquence du mouvement involontaire sur la base des secondes données (130) ; et
modifier dynamiquement le signal de sortie radar en fonction de la fréquence déterminée en continu.

5. Système radar (500) selon la revendication 3 ou la revendication 4, dans lequel l'ensemble de circuits de traitement (140) est en outre conçu pour déterminer des fenêtres multiples en effectuant un fenêtrage sur les secondes données (130), dans lequel l'ensemble de circuits de traitement (140) est conçu pour déterminer la fréquence du mouvement involontaire pour chacune des fenêtres multiples.

6. Système radar (500) selon l'une quelconque des revendications 3 à 5, dans lequel les secondes données (130) indiquent une accélération du capteur radar (520) provoquée par le mouvement involontaire, dans lequel l'ensemble de circuits de traitement (140) est en outre conçu pour déterminer le mouvement involontaire sur la base de l'accélération du capteur radar (520).

7. Système radar (500) selon l'une quelconque des revendications précédentes, dans lequel l'ensemble de circuits de traitement (140) est conçu pour modifier le signal de sortie radar par filtrage de fréquence de la représentation de distance, et dans lequel l'ensemble de circuits de traitement (140) est en outre conçu pour ajuster, à l'aide d'un filtre numérique conçu pour atténuer ou supprimer une fréquence de distorsion dans la représentation de distance, un paramètre de filtre pour filtrer en fréquence la représentation de distance sur la base des secondes données (130).

8. Système radar (500) selon l'une quelconque des revendications 3 à 6, dans lequel l'ensemble de circuits de traitement (140) est conçu pour modifier le signal de sortie radar en filtrant la fréquence du mouvement involontaire dans la représentation de distance.

9. Système radar (500) selon la revendication 8, dans lequel l'ensemble de circuits de traitement (140) est conçu pour filtrer la fréquence du mouvement involontaire par filtrage coupe bande de la représentation de distance dans une plage de fréquences incluant la fréquence déterminée du mouvement involontaire.

10. Système radar (500) selon l'une quelconque des revendications précédentes, dans lequel l'ensemble de circuits de traitement (140) est conçu pour :

modifier les secondes données (130) ou des données dérivées de celles-ci sur la base d'une fonction de transfert indiquant une relation entre le mouvement involontaire et une distorsion de phase ou de fréquence du signal de sortie radar provoquée par le mouvement involontaire ; et
modifier le signal de sortie radar sur la base des secondes données modifiées (130) ou des données modifiées dérivées de celles-ci.

11. Système radar (500) selon la revendication 10, dans lequel la fonction de transfert est basée sur un modèle d'apprentissage automatique entraîné ou un modèle mathématique.

12. Appareil (500) selon l'une quelconque des revendications précédentes, dans lequel l'ensemble de circuits de traitement (140) est conçu pour :

déterminer une représentation de distance-vitesse du signal de sortie radar modifié ; et
détecter une cible en mouvement dans un champ de vision du capteur radar (520) en fonction de la représentation de distance-vitesse.

13. Procédé (600) de compensation d'un mouvement involontaire d'un capteur radar dans un signal de sortie radar du capteur radar, comprenant :

l'émission, par le capteur radar, d'ondes radiofréquences dans un champ de vision du capteur radar ;

la génération, par le capteur radar, du signal de sortie radar sur la base de réflexions reçues des ondes radiofréquences émises ;

la génération, par un capteur de mouvement couplé mécaniquement au capteur radar, de secondes données indiquant le mouvement involontaire du capteur radar ;

la réception (610), par un ensemble de circuits d'interface, de premières données indiquant le signal de sortie radar du capteur radar ;

la réception (620), par l'ensemble de circuits d'interface, des secondes données ;

la détermination, par un ensemble de circuits de traitement, d'une représentation de distance du signal de sortie radar ; le procédé étant en outre **caractérisé en ce qu'**il comprend :

la modification (630), par l'ensemble de circuits de traitement, du signal de sortie radar sur la base des secondes données pour compenser le mouvement involontaire dans le signal de sortie radar, dans lequel la modification (630) du signal de sortie radar comprend la modification de la représentation de distance sur la base des secondes données.

FIG. 1

100

# FIG. 2

Range bins

210-8

Chirps

210-2

210-1

220

200

## FIG. 3

Vibration during one frame

Phase Shift during one frame

EP 4 361 667 B1

# FIG. 4a

### Undistorted (original) RangeDoppler Map

### Undistorted spectrum @ range bin 22

# FIG. 4b

### Distorted RangeDoppler Map

### Distorted spectrum @ range bin 22

# FIG. 4c

**Filtered RangeDoppler Map**

**Filtered spectrum @ range bin 22**

FIG. 5

FIG. 6

600

```
receiving first data indicating a radar output
signal of a radar sensor
```
610

```
receiving second data indicating an
involuntary movement of the radar sensor
```
620

```
modifying the radar output signal based on
the second data for compensating the
involuntary movement in the radar output
signal
```
630

# FIG. 7

700

710 — ① Raw data

720 — ② RangeFFT

730 — Range data

740 — ⓐ IMU

750 — ⓑ Estimate spectrum

760 — ⓒ Optional: Transfer function

770 — ③ Bandstop to filter phase distortion along chirps

780 — (Compensated) Range data

**EP 4 361 667 B1**

**Patent documents cited in the description**

- DE 102017205331 A1
- EP 1819012 A2
- US 2020041610 A1